# EUROPÄISCHE PATENTANMELDUNG

(11) **EP 1 288 041 A2**
(43) Veröffentlichungstag der Anmeldung: **05.03.2003**
(21) Anmeldenummer: 02018846.2
(22) Anmeldetag: 23.08.2002
(51) Int. Cl.: B60J 7/02

(54) **Schiebedachvorrichtung mit einem Schiebehimmel**

(30) Priorität: 30.08.2001 DE 10142078
(71) Anmelder: Webasto Vehicle Systems International GmbH, 82131 Stockdorf (DE)
(72) Erfinder: Kralik, Martin, 82362 Weilheim (DE)
(74) Vertreter: Konnerth, Dieter Hans

(57) **Zusammenfassung**

Die Erfindung betrifft eine Schiebedachvorrichtung für ein Fahrzeugdach mit einem verschiebbaren Deckel (14) zum wahlweisen Verschließen oder zumindest teilweisen Freigeben einer Dachöffnung 15) in dem Fahrzeugdach, der an seinem Hinterrand in eine Lüftungsstellung ausstellbar ist, und mit einem unterhalb des Deckels (14) verschiebbar angeordneten Schiebehimmel (1), der bei seiner Positionierung unter dem ausgestellten Deckel (14) an seinem Hinterabschnitt zum Freilegen eines Lüftungsspaltes angehoben und in dieser angehobenen Position gehalten ist, wobei eine an dem Hinterabschnitt (25) des Schiebehimmels (1) angreifende Hubeinrichtung (30) vorgesehen ist, deren Hubkraft den Hinterabschnitt (25) in seine hochgeklappte Stellung vorspannt.

## Beschreibung

Die vorliegende Erfindung betrifft eine Schiebedachvorrichtung für ein Fahrzeugdach mit einem verschiebbaren Deckel zum wahlweisen Verschließen oder zumindest teilweisen Freigeben einer Dachöffnung in dem Fahrzeugdach, der an seinem Hinterrand in eine Lüftungsstellung ausstellbar ist, und mit einem unterhalb des Deckels verschiebbar angeordneten Schiebehimmel, der bei seiner Positionierung unter dem ausgestellten Deckel an seinem Hinterabschnitt zum Freilegen eines Lüftungsspaltes angehoben und in dieser angehobenen Position gehalten ist.

Aus der DE 198 58 676 A1 ist ein Fahrzeugdach mit einer Dachöffnung und einer Schiebedachvorrichtung bekannt geworden, bei dem der Schiebehimmel in seiner hochgeklappten Stellung mittels einer Rasteinrichtung mit dem Deckel verbunden und an diesem gehalten ist. Wenn die Rasteinrichtung eine hohe Rastkraft aufweist, um den Schiebehimmel an dem Deckel sicher festzuhalten, wir die manuelle Betätigung erschwert. Bei einer geringen Rastkraft kann sich der Schiebehimmel vom Deckel lösen und absenken.

Der Erfindung liegt die Aufgabe zugrunde, eine eingangs genannte Schiebedachvorrichtung mit einem Schiebehimmel derart zu verbessern, daß der Schiebehimmel in seiner hochgeklappten Lüftungsstellung sicher gehalten ist und die Betätigung des Schiebehimmels dennoch ohne großen Kraftaufwand möglich ist.

Diese Aufgabe wird bei der eingangs genannten Schiebedachvorrichtung erfindungsgemäß dadurch gelöst, daß eine an dem Hinterabschnitt des Schiebehimmels angreifende Hubeinrichtung vorgesehen ist, deren Hubkraft den Hinterabschnitt in seine hochgeklappte Stellung vorspannt. Während der Hinterabschnitt durch eine Führungs- oder Verstelleinrichtung in die hochgeklappte Position bewegt wird, sorgt die Hubkraft dafür, daß der Hinterabschnitt entlang seiner Führungs- oder Verstelleinrichtung in seiner Bewegungsrichtung vorgespannt gehalten ist. Die Hubkraft der Hubeinrichtung ist dabei derart gerichtet, daß zumindest eine Komponente der Hubkraft in Richtung entlang der Führung für den Hinterabschnitt wirkt.

Vorteilhafte Ausgestaltungen der Erfindung sind in den Unteransprüchen angegeben.

In einer bevorzugten Gestaltung weist die Hubeinrichtung bei hochgeklapptem Hinterabschnitt eine erhöhte oder maximale Hubkraft und bei in die Verschiebeebene des Schiebehimmels zurückgeklapptem Hinterabschnitt eine reduzierte oder minimale Hubkraft auf. Auf diese Weise kann einer Rückstellkraft des verformten Materials des Schiebehimmels entgegengewirkt werden, die beim Hochklappen zunimmt. Andererseits wird in der flachen herabgeklappten Anordnung durch die minimale Kraft, die senkrecht zur Führung wirkt, der Reibungswiderstand niedrig gehalten, so daß der Betätigungswiderstand beim Verschieben des Schiebehimmels nicht erhöht wird.

Wenn die Hubeinrichtung derart ausgelegt ist, daß sich die Hubkraft beim Hochklappen des Hinterabschnitts des Schiebehimmels kontinuierlich erhöht, wird das manuelle Verschieben des Schiebehimmels erleichtert und auch die Endstellung wird kontinuierlich angefahren, ohne daß ein erhöhter Rastwiderstand einer konventionellen Rasteinrichtung zu überwinden wäre oder ein Rastgeräusch auftreten würde.

Eine zweckmäßige Gestaltung der Führung für den Hinterabschnitt sieht vor, daß der Hinterabschnitt des Schiebehimmels an einer aufwärts gebogenen oder geschwenkten Führungsbahn in seine hochgeklappte Position geführt ist. Durch eine kontinuierliche Führungsbahn werden Übergänge oder Ankoppelvorgänge vermieden. Der Vorderabschnitt des Schiebehimmels ist zweckmäßigerweise an einer Führungsbahn in der Verschiebeebene geführt.

Vorzugsweise verbindet die Hubeinrichtung den Vorderabschnitt und den Hinterabschnitt des Schiebehimmels oberseitig und bringt in einer einfachen Gestaltung mittels einer Federeinrichtung und insbesondere mittels einer Zugfeder die Hubkraft auf den Hinterabschnitt auf.

In einer alternativen Gestaltung weist die Hubeinrichtung eine Hebeleinrichtung mit einem vorderen Hebel und einem hinteren Hebel auf, die einerseits am Vorderabschnitt bzw. am Hinterabschnitt des Schiebehimmels schwenkbar angelenkt sind und andererseits miteinander in einer Gelenkachse schwenkbar verbunden sind, wobei die Federeinrichtung bzw. die Zugfeder den hinteren Hebel oder die Gelenkachse mit dem Vorderabschnitt verbindet. Hierbei sind unterschiedliche Gestaltungen möglich, die die als Hubkraft wirksame Federkraft beim Hochklappen des Hinterabschnitts erhöhen.

Nachfolgend werden Ausführungsbeispiele der Schiebedachvorrichtung unter Bezugnahme auf die Zeichnung näher erläutert. Es zeigt:
- Fig. 1: in einer Seitenansicht in schematischer Darstellung eine Schiebedachvorrichtung mit einem ausgestellten Deckel und einem Schiebehimmel mit einer Feder als Hubvorrichtung zum Vorspannen des Schiebehimmels in seine hochgeklappte Lüftungsstellung;
- Fig. 2: in einer perspektivischen Draufsicht den Schiebehimmel mit der Feder;
- Fig. 3: in einer Seitenansicht die Schiebedachvorrichtung mit einem zweiten Ausführungsbeispiel der Hubvorrichtung in herabgeklappter Schließstellung des Schiebehimmels;
- Fig. 4: in einer Seitenansicht die Schiebedachvorrichtung mit ausgestelltem Deckel und hochgeklapptem Schiebehimmel;
- Fig. 5: in einer perspektivischen Draufsicht den Schiebehimmel mit dem zweiten Ausführungsbeispiel der Hubvorrichtung;
- Fig. 6: in einem Längsschnitt die Schiebedachvorrichtung mit ausgestelltem Deckel und hochgeklapptem Schiebehimmel;
- Fig. 7: in einer perspektivischen Teilansicht die Schiebedachvorrichtung in der Schließposition des nicht dargestellten Deckels und bei geschlossenem Schiebehimmel;
- Fig. 8: in einer Ansicht gemäß Fig. 7 die Schiebedachvorrichtung in der Dekkel-Ausstellposition und der Schiebehimmel-Ausstellposition;
- Fig. 9: in einer Ansicht gemäß Fig. 7 die Schiebedachvorrichtung in der Dekkel-Ausstellposition, wobei der Schiebehimmel in Richtung zu seiner Öffnungsposition zurückgeschoben ist; und
- Fig. 10: in einer Ansicht gemäß Fig. 7 die Schiebedachvorrichtung, wobei der Deckel in Richtung seiner Öffnungsposition und der Schiebehimmel in Richtung seiner Öffnungsposition verschoben ist.

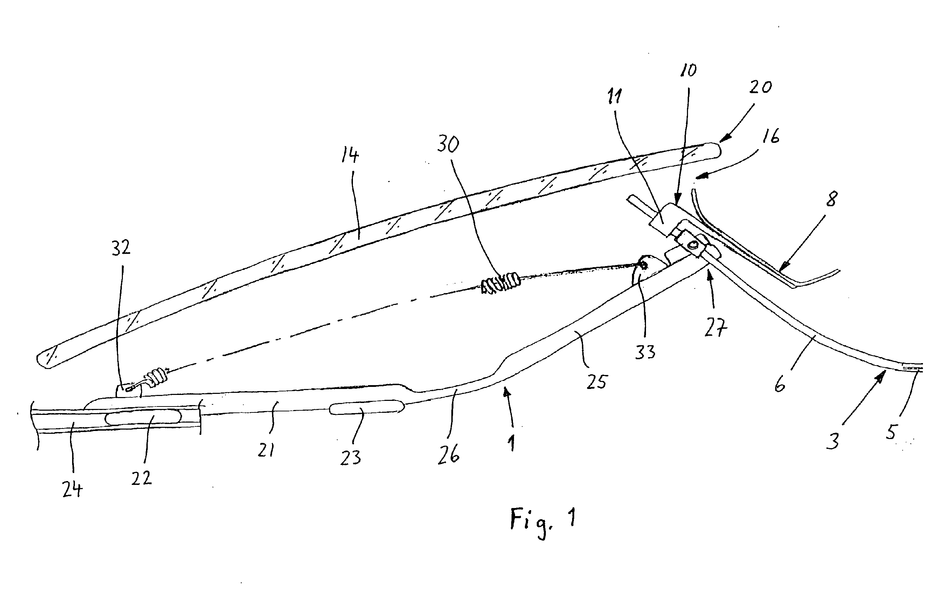

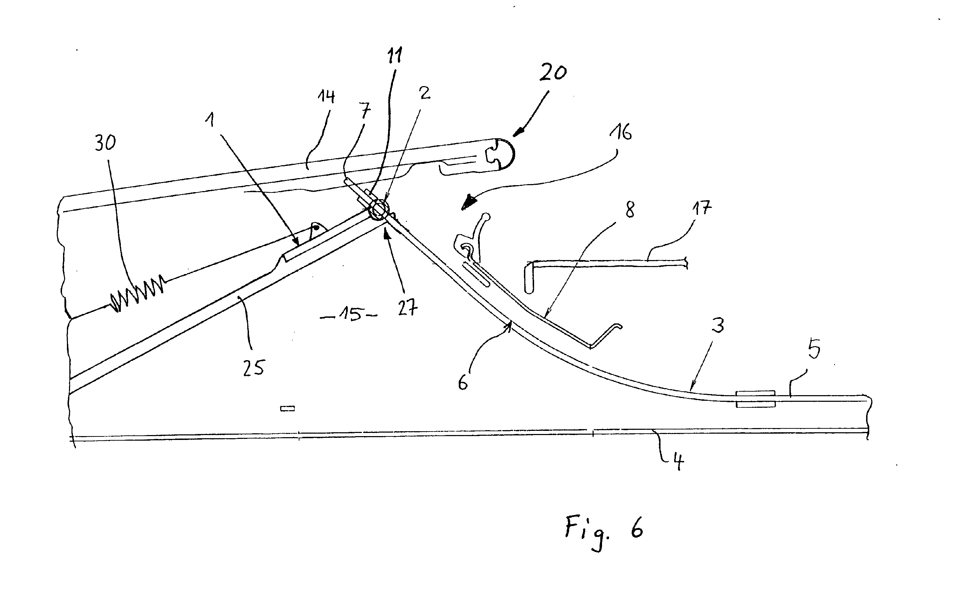

Eine Schiebedachvorrichtung für ein Fahrzeugdach enthält einen Deckel 14 zum Verschließen einer im Fahrzeugdach 17 gebildeten Dachöffnung 15 (siehe Fig. 1 und 6). Der transparente Deckel 14, insbesondere ein Glasdeckel, ist in bekannter Weise an seinem Hinterrand 20 in eine Lüftungsstellung ausstellbar und in einer abgesenkten Stellung an Führungen 4 nach hinten unter die feste Dachhaut verschiebbar, um die Dachöffnung 15 zumindest teilweise oder gänzlich freizugeben. Ein derartiger Deckel 14 ist beispielsweise in der DE 198 58 676 A1 offenbart.

Unterhalb des Deckels 14 ist ein Himmelteil oder Schiebehimmel 1 verschiebbar gelagert, der in seiner Schließstellung unter dem Deckel 14 bzw. der Dachöffnung 15 zur Reduzierung des Lichteinfalls angeordnet ist. Der Schiebehimmel 1, der beispielsweise aus PU-Schaum hergestellt ist, enthält einen Vorderabschnitt 21, der über jeweils zwei seitliche Gleiter 22 und 23 an einer jeweiligen Führungsschiene 24 verschiebbar geführt ist, und einen Hinterabschnitt 25, der über einen flexiblen Zwischenabschnitt 26, der sich quer über den Schiebehimmel 1 erstreckt, mit dem Vorderabschnitt 21 verbunden ist und an dem flexiblen Zwischenabschnitt 26 gegenüber dem Vorderabschnitt 21 hochschwenkbar oder hochklappbar ist, so daß zwischen dem ausstellbaren Hinterrand 27 des Schiebehimmel s 1 bzw. des Hinterabschnitts 25 und dem festen Fahrzeugdach 17 ein Lüftungsspalt 16 freigegeben ist. Im Bereich des Hinterrandes 27 ist seitlich am Hinterabschnitt 25 jeweils eine Halterung 28 mit einem Gleiter 2 befestigt, der an einer Himmelführung 3 gelagert ist, die in ihrem Vorderabschnitt 6 hochschwenkbar ist, so daß der an dem hochgeschwenkten Vorderabschnitt 6 geführte Gleiter 2 den Hinterrand 27 des Hinterabschnitts 25 des Schiebehimmel s 1 anhebt und damit den Hinterabschnitt 25 um den flexiblen Zwischenabschnitt 26 hochschwenkt, wobei das Hochschwenken gegen eine sich der Verformung widersetzende elastische Kraft des Materials des Schiebehimmels 1 erfolgt und insbesondere bei einem in Querrichtung geringfügig gewölbten Schiebehimmel 1 eine Rückstellkraft des Materials überwunden werden muß.

Gemäß einem nachfolgend beschriebenen Ausführungsbeispiel ist die Himmelführung 3 als eine mit Kunststoff beschichtete Metallstange gebildet, die einen dachfesten Abschnitt 5 und den flexibel gebildeten Vorderabschnitt 6 mit einem beweglichen Ende 7 aufweist.

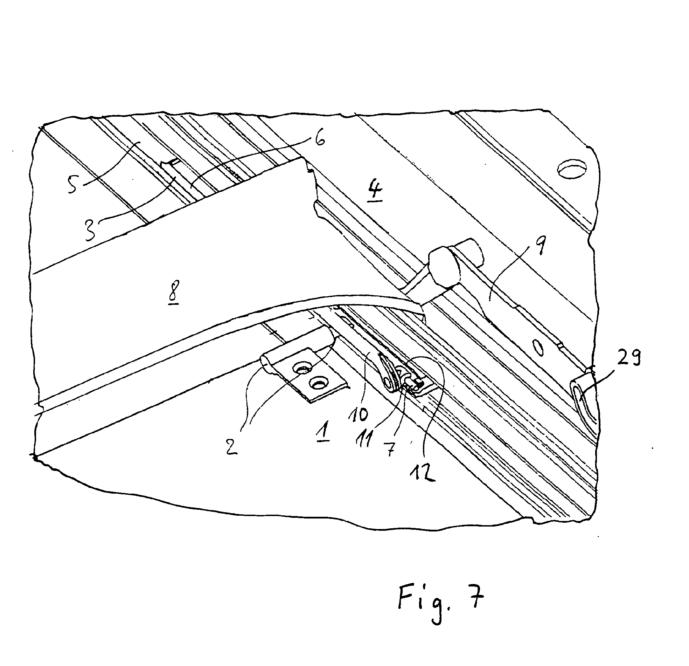

Dem Deckel 14 ist eine Wasserrinne 8 zugeordnet, die in den durch die ausgestellte Hinterkante 20 des Deckels 14 freigegebenen Lüftungsspalt 16 eindringendes Wasser auffangen und in seitliche Wasserrinnen am Rahmen der Schiebedachvorrichtung ableiten kann. Die Wasserrinne 8 bewegt sich mit dem Deckel 14 in ihre jeweilige Position. Die Bewegungen des Deckels 14 werden von einem an sich bekannten Hebelgestänge 9 gesteuert, das über eine in Fig. 7 am rechten Rand erkennbare Kulissensteuerung 29 angetrieben ist.

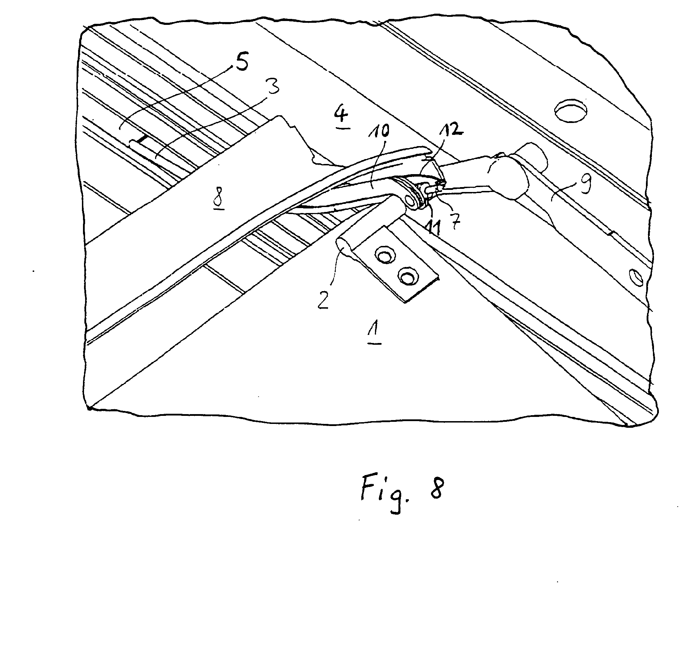

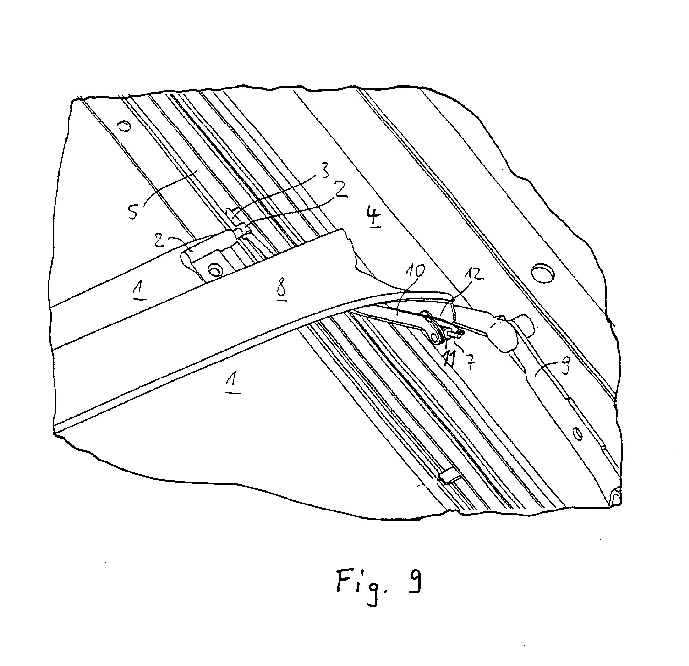

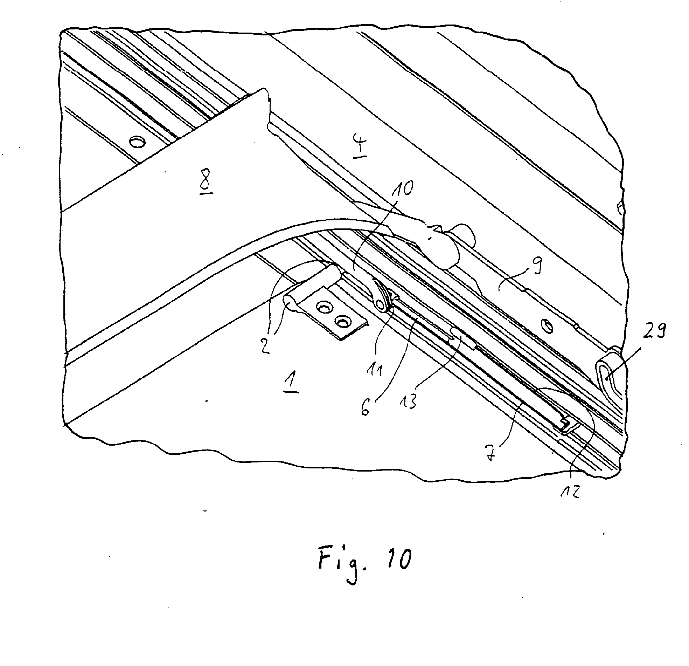

An der Wasserrinne 8 ist ein Steuerhebel 10 fest angebracht, an dessen von der Wasserrinne 8 entfernten Vorderende ein Mitnehmer 11 angeordnet ist, der entweder um eine horizontale Achse beweglich gehalten ist (siehe Fig. 7 bis 10) oder fest mit dem Steuerhebel 10 verbunden ist (Fig. 1). Durch die Bewegung der Wasserrinne 8 wird über den Steuerhebel 10 und den Mitnehmer 11 das bewegbare Ende 7 der Himmelführung 3 bei der Bewegung des Deckels 14 in seine Ausstellposition mitgenommen, wie insbesondere aus den Fig. 8 und 9 erkennbar ist. Dabei verbleibt der Mitnehmer 11 im Endbereich des bewegbaren Endes 7 der Himmelführung 3. Daher kann der ebenfalls an der Himmelführung 3 verschiebbar gelagerte Gleiter 2 mit dem Schiebehimmel 1 entlang der Himmelführung 3 verschoben werden, bis er an dem Mitnehmer 11 anliegt (siehe Fig. 1 und 8). Dabei bildet die Himmelführung 3 mit ihrem flexiblen Vorderabschnitt 6 zwischen dem fest montierten Bereich 5 und dem bewegbaren Ende 7 je nach Lage des Steuerhebels 10 eine unterschiedlich geformte Bahn. Bei geschlossenem oder in Richtung seiner Öffnungsposition verschobenem Deckel 14 (vgl. Fig. 7 und Fig. 10) ist diese Bahn gerade, so daß der Schiebehimmel 1 zwischen seiner zurückgeschobenen Öffnungsposition unter dem Fahrzeugdach 17 und einer durch das Anschlagen an den Mitnehmer 11 bestimmten Schließposition in beide Richtungen verschoben werden kann. Dies erfolgt bei diesem Ausführungsbeispiel manuell mit Hilfe einer nicht dargestellten innenraumseitigen Griffmulde am Himmelteil 1, jedoch kann auch Antrieb vorgesehen sein.

Das bezüglich des Fahrzeugdaches hintere Ende der Wasserrinne 8 ist an einem in den Fig. 7 bis 10 verdeckten Führungsschuh angelenkt, der entlang der Führungsschienen 4 verschiebbar ist und einen Teil der Bewegungsmechanik des Deckels 14 bildet. Die Vorderkante des Deckels 14 ist ebenfalls entlang der Führungsschienen 4 verschiebbar gelagert.

Bei durch Ausstellen des Deckels 14 schräg aufgestelltem Steuerhebel 10 ist der flexible Vorderabschnitt 6 der Himmelführung 3 gekrümmt (siehe Fig. 1 und 8). Das bewegbare Ende 7 bleibt dabei gerade, und zwar infolge einer Versteifung durch eine in diesem Bereich auf der dem Steuerhebel 10 abgewandten Seite des Führungselements 3 angebrachten Versteifungsstruktur 12. Hierbei handelt es sich z. B. um ein mit einer Kunststoffbeschichtung versehenes, vorzugsweise angespritztes Kunststoffteil.

Die Himmelführung 3, die aus ihrem festen Abschnitt 5 und ihrem flexiblen Vorderabschnitt 6 einstückig ausgebildet ist, ist vorzugsweise eine mit Kunststoff umspritzte flexible Stahlstange oder Blattfeder, wobei die Befestigung an dem Fahrzeugdach in dem festen Abschnitt 5 über ein angespritztes Kunststoff-Montageelement erfolgt. Die Stahlstange hat beispielsweise einen kreisförmigen Querschnitt.

Aufgrund dieser Gestaltung nimmt der Deckel 14 den Schiebehimmel 1 bei einer Ausstellbewegung von der Schließposition gemäß Fig. 7 in die Ausstellposition gemäß Fig. 8 mit und der Schiebehimmel 1 kann aus seiner Ausstellposition in Richtung zur Öffnungsposition verschoben werden (von Fig. 8 nach Fig. 9), wobei Fig. 9 eine Zwischenstufe der Bewegung in die vollständige Öffnungsposition zeigt.

Fig. 10 zeigt im Vergleich zu Fig. 7, wie der Deckel 14 aus der seiner Schließposition in Fig. 7 in Richtung zu seiner Öffnungsposition verschoben werden kann. Dabei wird zunächst der Deckel 14 etwas abgesenkt, um unter das feste Fahrzeugdach 17 verschoben werden zu können, was sich an der in Fig. 10 gegenüber Fig. 7 flacheren Stellung des Hebelgestänges 9 erkennen läßt. Außerdem ist der Mitnehmer 11 von der Spitze des bewegbaren Endes 7 der Himmelführung 3 bereits etwas entfernt. Man erkennt außerdem, daß der Mitnehmer 11 bei dieser Bewegung den Gleiter 2 und damit den Schiebehimmel 1 mitnehmen kann, wenngleich in Fig. 10 der Übersichtlichkeit halber keine direkte Anlage zwischen dem Mitnehmer 11 und dem Gleiter 2 dargestellt ist.

Wenn der Schiebehimmel 1 in seine Schließstellung unter den Deckel 14 verschoben ist und der Hinterabschnitt 25 bei ausgestelltem Deckel 14 hochgeklappt ist, wird durch Erschütterungen im Fahrbetrieb der Hinterabschnitt 25 aufgrund der angesprochenen Materialspannung am verformten Zwischenabschnitt 26 und zu einem gewissen Teil auch durch sein Gewicht abwärts bewegt, da diese Rückstellkraft kleiner ist wie die Gleitreibungskraft der Gleiter 22 und 23 und 2 an ihren Führungen. Dadurch würde der Gleiter 2 an dem aufwärts gebogenen Vorderabschnitt 6 der Himmelführung 3 nach hinten schräg abwärts gleiten und somit den Schiebehimmel 1 nach hinten ziehen, wenn dagegen keine Maßnahme getroffen ist. Statt einer an sich bekannten Rasteinrichtung, die insbesondere am Vorderabschnitt 21 des Schiebehimmels 1 angeordnet sein könnte und durch festes Einrasten z. B. an der Führung 24 ein Verschieben des Schiebehimmels 1 unterbinden könnte, ist erfindungsgemäß vorgesehen, daß eine Hubeinrichtung eine Halte- oder Hubkraft auf den Hinterabschnitt 25 in einer solchen Wirkrichtung aufbringt, so daß dieser in Richtung gegen den Mitnehmer 11 der Wasserrinne 8 gedrückt wird und auch direkt an diesem anliegen kann.

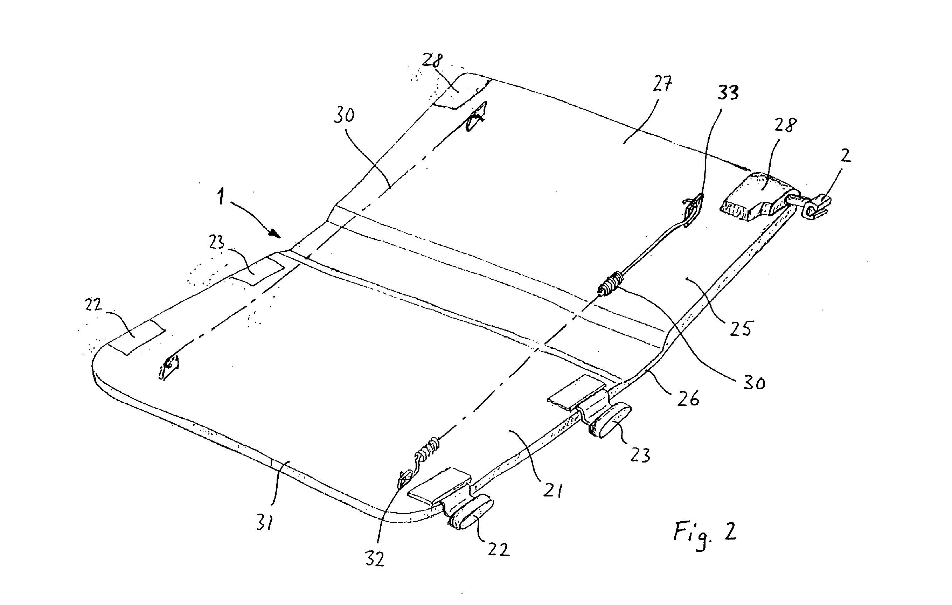

Die Hubeinrichtung enthält gemäß einem ersten Ausführungsbeispiel (siehe Fig. 1 und 2) eine Zugfeder 30, die einerseits im Bereich des Vorderrandes 31 des Vorderabschnitts 21 und andererseits im Bereich des Hinterrandes 27 des Hinterabschnitts 25 an der Oberseite des Schiebehimmels 1 gelagert ist, beispielsweise an einem vorderen Halteteil 32 und einem hinteren Halteteil 33, die in dem PU-Schaummaterial des Schiebehimmels 1 eingeschäumt sind und nach oben vorstehen. Wenn der Schiebehimmel 1 nach hinten verschoben ist und bei herabgeklapptem Hinterabschnitt 25 vollständig in der Verschiebeebene entlang der Führungen 24 angeordnet ist, ist die Zugfeder 30 am stärksten expandiert, so daß die Zugkraft in Längsrichtung der Zugfeder 30 maximal ist. Die nach oben gerichtete Komponente der Zugfederkraft bzw. die Schwenkkraft ist aufgrund der Kraftrichtungen jedoch gering bzw. minimal, so daß auch das manuelle Verschieben des Schiebehimmels 1 nicht durch hohe Reibungskräfte am Gleiter 2 erschwert wird.

Wenn der Schiebehimmel 1 bei ausgestelltem Deckel 14 nach vorne verschoben wird, schwenkt der hintere Gleiter 2 den Hinterabschnitt 25 nach oben, wobei sich zwar die Zugfeder 30 verkürzt, jedoch durch den sich vergrößernden Abstand der Zugfeder 30 von dem Zwischenabschnitt 26 und der sich ändernden Hebel- und Kraftverhältnisse diejenige Kraftkomponente, die den Hinterabschnitt 25 nach oben verschwenkt, kontinuierlich zunimmt, bis gemäß Fig. 1 der hintere Gleiter 2 am Mitnehmer 11 der Wasserrinne 8 anliegt. Die Zugkraft der Zugfeder 30 drückt somit den Schiebehimmel 1 gegen die Materialspannung bzw. Rückstellkraft sowie die Gewichtskraft seines Hinterabschnitts 25 in die hochgeklappte Lüftungsstellung, so daß eine Verrastung am Vorderabschnitt 21 des Schiebehimmels 1 nicht erforderlich ist. Da die Zugfeder 30 beidseits an dem Schiebehimmel 1 gelagert ist, ist eine Abstützung am Fahrzeugdach oder einem dachfesten Teil oder eine bedarfsweise Ankopplung einer Kraft nicht erforderlich, so daß ein betriebssicheres Verhalten erreicht ist.

Die Hubeinrichtung kann eine Zugfeder 30, zwei parallel angeordnete Zugfedern 30 (siehe Fig. 2) oder auch mehr als zwei parallel geschaltete Zugfedern aufweisen.

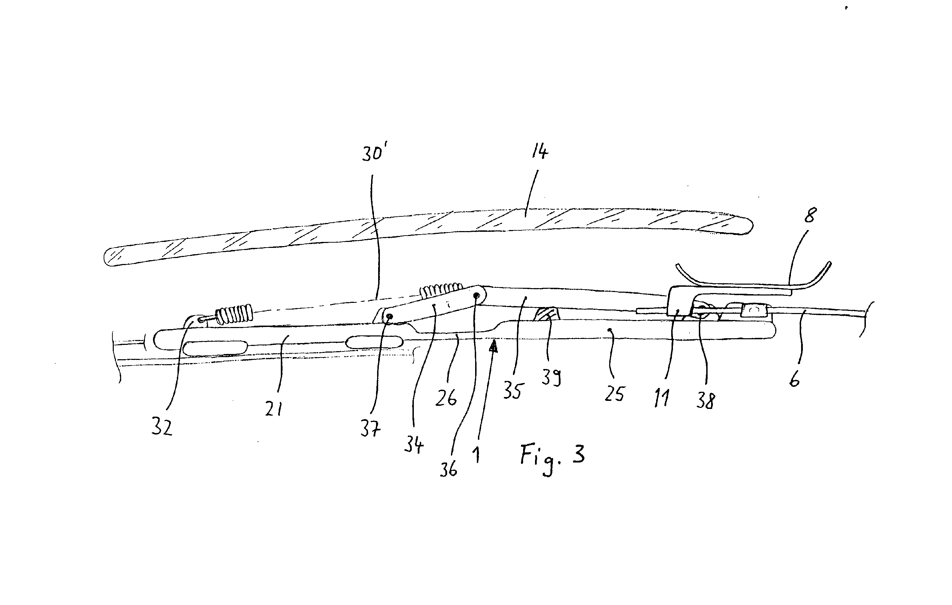

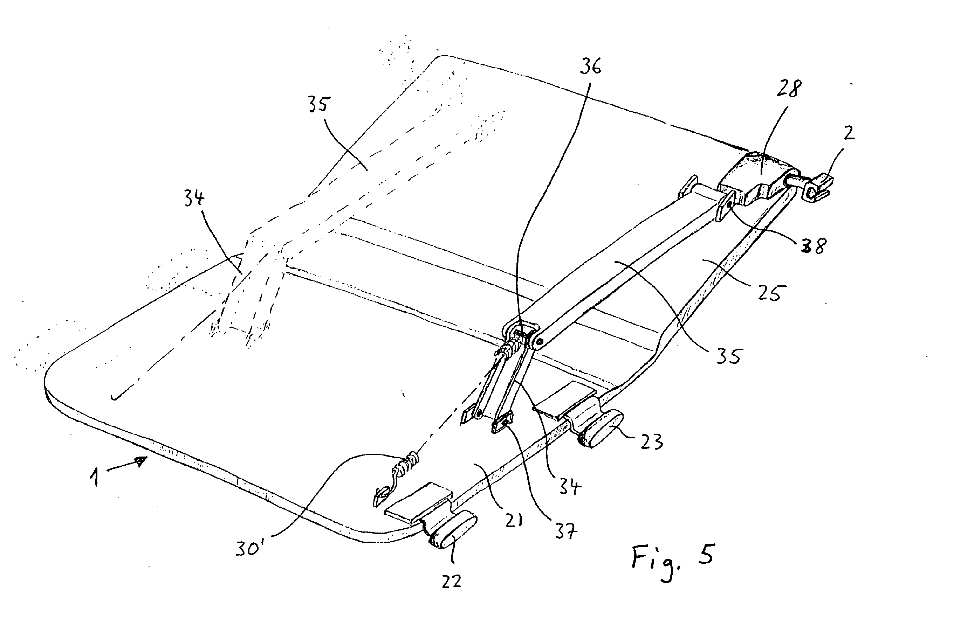

Ein zweites Ausführungsbeispiel der Hubeinrichtung (siehe Fig. 3 bis 5) enthält eine Hebeleinrichtung mit einen vorderen kürzeren Hebel 34 und einen hinteren längeren Hebel 35, die einerseits miteinander in einer Gelenkachse 36 schwenkbar verbunden sind und andererseits am Vorderabschnitt 21 bzw. am Hinterabschnitt 25 in Gelenken 37 bzw. 38 angelenkt sind. Eine Zugfeder 30' ist einerseits an dem vorderen Halteteil 32 und andererseits an der Gelenkachse 36 eingehängt. In der herabgeklappten Stellung des Hinterabschnitts 25 (Fig. 3) liegt der hintere Hebel 35 elastisch an einem Puffer 39 an , der an der Oberseite des Hinterabschnitts 25 hervorsteht und das Absinken des hinteren Hebels 35 in eine Totpunktstellung bezüglich des vorderen Hebels 34 verhindert. Die Gelenkachse 36 ist somit geringfügig oberhalb der Verbindungsgeraden zwischen den Gelenken 37 und 38 angeordnet. In dieser Stellung ist die Zugfeder 30' maximal expandiert, die maximale Federzugkraft wirkt jedoch nur in minimaler Stärke als am hinteren Gelenk 37 aufwärts gerichtete Hubkraft, da die vom hinteren Hebel 35 übertragene Federzugkraft nahezu parallel zum Hinterabschnitt 25 eingeleitet wird.

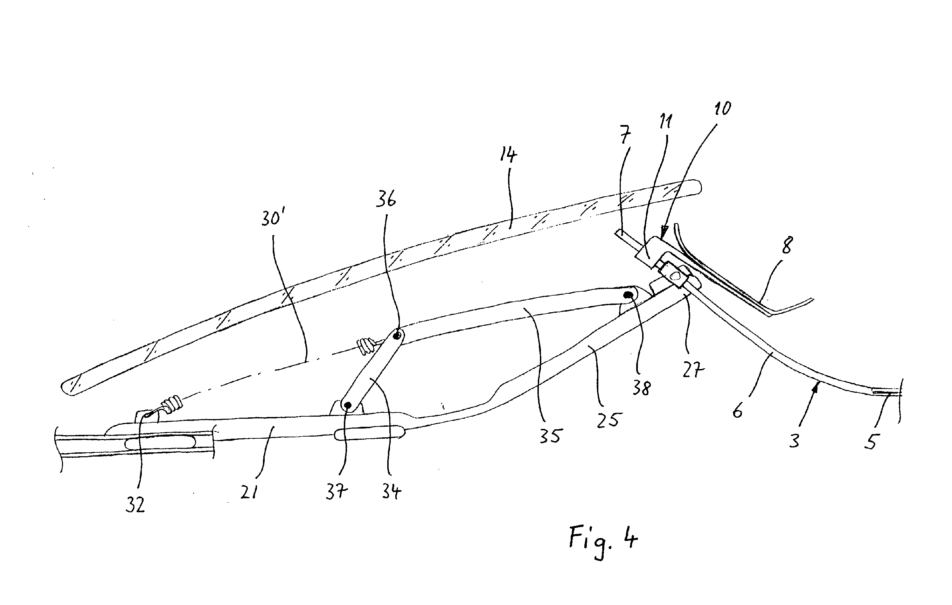

Die Länge und Position des kurzen vorderen Hebels 34 ist beispielsweise derart abgestimmt, daß in der hochgeklappten Stellung des Hinterabschnitts 25 (Fig. 4) die Zugfeder 30' und der hintere Hebel 35 in etwa auf einer Geraden liegen.

### Bezugszeichenliste

- 1: Schiebehimmel
- 2: Gleiter
- 3: Himmelführung
- 4: Führung
- 5: fester Abschnitt
- 6: Vorderabschnitt
- 7: bewegliches Ende
- 8: Wasserrinne
- 9: Hebelgestänge
- 10: Steuerhebel
- 11: Mitnehmer
- 12: Versteifungsstruktur
- 14: Deckel
- 15: Dachöffnung
- 16: Lüftungsspalt
- 17: Fahrzeugdach
- 20: Hinterrand des Deckels
- 21: Vorderabschnitt
- 22: Gleiter
- 23: Gleiter
- 24: Führungsschiene
- 25: Hinterabschnitt
- 26: Zwischenabschnitt
- 27: Hinterrand
- 28: Halterung
- 29: Kulissensteuerung
- 30: Zugfeder
- 30': Zugfeder
- 31: Vorderrand
- 32: Halteteil
- 33: Halteteil
- 34: Hebel
- 35: Hebel
- 36: Gelenkachse
- 37: Gelenk
- 38: Gelenk
- 39: Puffer

## Patentansprüche

1. Schiebedachvorrichtung für ein Fahrzeugdach mit einem verschiebbaren Deckel zum wahlweisen Verschließen oder zumindest teilweisen Freigeben einer Dachöffnung in dem Fahrzeugdach, der an seinem Hinterrand in eine Lüftungsstellung ausstellbar ist, und mit einem unterhalb des Deckels verschiebbar angeordneten Schiebehimmel, der bei seiner Positionierung unter dem ausgestellten Deckel an seinem Hinterabschnitt zum Freilegen eines Lüftungsspaltes angehoben und in dieser angehobenen Position gehalten ist,
**dadurch gekennzeichnet,**
**daß** eine an dem Hinterabschnitt (25) des Schiebehimmels (1) angreifende Hubeinrichtung (30) vorgesehen ist, deren Hubkraft den Hinterabschnitt (25) in seine hochgeklappte Stellung vorspannt.

2. Schiebedachvorrichtung nach Anspruch 1,
**dadurch gekennzeichnet, daß** die Hubeinrichtung (30) bei hochgeklapptem Hinterabschnitt (25) eine erhöhte oder maximale Hubkraft und bei in die Verschiebeebene des Schiebehimmels (1) zurückgeklapptem Hinterabschnitt (25) eine reduzierte oder minimale Hubkraft aufweist.

3. Schiebedachvorrichtung nach Anspruch 1 oder 2,
**dadurch gekennzeichnet, daß** sich die Hubkraft beim Hochklappen des Hinterabschnitts (25) des Schiebehimmels (1) kontinuierlich erhöht.

4. Schiebedachvorrichtung nach einem der Ansprüche 1 bis 3,
**dadurch gekennzeichnet, daß** der Hinterabschnitt (25) des Schiebehimmels (1) an einer aufwärts gebogenen Führungsbahn (6) in seine hochgeklappte Position geführt ist.

5. Schiebedachvorrichtung nach einem der Ansprüche 1 bis 4,
**dadurch gekennzeichnet, daß** der Vorderabschnitt (21) des Schiebehimmels (1) an einer Führungsbahn (24) in der Verschiebeebene geführt ist.

6. Schiebedachvorrichtung nach einem der Ansprüche 1 bis 5,
**dadurch gekennzeichnet, daß** die Hubeinrichtung den Vorderabschnitt (21) und den Hinterabschnitt (25) des Schiebehimmels (1) oberseitig verbindet und mittels einer Zugfeder (30; 30') die Hubkraft auf den Hinterabschnitt (25) aufbringt.

7. Schiebedachvorrichtung nach Anspruch 6,
**dadurch gekennzeichnet, daß** die Hubeinrichtung eine Hebeleinrichtung mit einem vorderen Hebel (34) und einem hinteren Hebel (35) aufweist, die einerseits am Vorderabschnitt (21) bzw. am Hinterabschnitt (25) des Schiebehimmels (1) schwenkbar angelenkt sind und andererseits miteinander in einer Gelenkachse (36) schwenkbar verbunden sind, und daß die Zugfeder (30') den hinteren Hebel (35) oder die Gelenkachse (36) mit dem Vorderabschnitt (21) verbindet.
